# EUROPEAN PATENT APPLICATION

(11) **EP 3 451 237 A1**
(43) Date of publication of application: **06.03.2019**
(21) Application number: 17789087.8
(22) Date of filing: 07.03.2017
(51) Int. Cl.: G06N 3/02, G06N 3/08, G06N 3/10

(54) **INFORMATION PROCESSING DEVICE AND INFORMATION PROCESSING METHOD**

(30) Priority: 28.04.2016 JP 2016091418
(71) Applicant: Sony Corporation, Tokyo 108-0075 (JP)
(72) Inventor: OOBUCHI, Yukio, Tokyo 108-0075 (JP); TAKAMATSU, Shingo, Tokyo 108-0075 (JP); FUKUI, Akira, Tokyo 108-0075 (JP); IDE, Naoki, Tokyo 108-0075 (JP); KOBAYASHI, Yoshiyuki, Tokyo 108-0075 (JP)
(74) Representative: MFG Patentanwälte Meyer-Wildhagen Meggle-Freund Gerhard PartG mbB
(86) International application number: PCT/JP2017/008988
(87) International publication number: WO 2017/187798

(57) **Abstract**

[Object] To provide an information processing apparatus which is capable of more efficiently designing a neural network which is fit for processing by a plurality of hardware devices, and an information processing method.

[Solution] An information processing apparatus including: an acquiring unit configured to acquire restrictions relating to a plurality of hardware devices; and a determining unit configured to perform determination as to whether or not a neural network satisfies the restrictions.

## Description

### Technical Field

The present disclosure relates to an information processing apparatus and an information processing method.

### Background Art

In recent years, a neural network which imitates a mechanism of a cranial neural system has attracted attention. Further, various kinds of methods for developing a neural network have been proposed. For example, Non-Patent Literature 1 discloses a library for monitoring learning process by a neural network.

### Citation List

### Non-Patent Literature

Non-Patent Literature 1: M. Abadi, and 39 others, "TensorFlow: Large-Scale Machine Learning on Heterogeneous Distributed Systems", November 9, 2015, [Online], [Retrieved on April 22, 2016], Internet, <http://download.tensorflow.org/paper/whitepaper2015.pdf>

### Disclosure of Invention

### Technical Problem

However, the library disclosed in Non-Patent Literature 1 assumes that a neural network is executed on a single hardware device, and it is difficult to design a neural network which is fit for processing by a plurality of hardware devices.

Therefore, the present disclosure proposes an information processing apparatus which is capable of more efficiently designing a neural network which is fit for processing by a plurality of hardware devices, and an information processing method.

### Solution to Problem

According to the present disclosure, there is provided an information processing apparatus including: an acquiring unit configured to acquire restrictions relating to a plurality of hardware devices; and a determining unit configured to perform determination as to whether or not a neural network satisfies the restrictions.

In addition, according to the present disclosure, there is provided an information processing apparatus including: a receiving unit configured to receive a determination result as to whether or not a neural network satisfies restrictions relating to a plurality of hardware devices; and a processing unit configured to perform processing on a basis of the determination result.

In addition, according to the present disclosure, there is provided an information processing method including: acquiring restrictions relating to a plurality of hardware devices; and performing determination as to whether or not a neural network satisfies the restrictions.

### Advantageous Effects of Invention

As described above, according to the present disclosure, it is possible to more efficiently design a neural network which is fit for processing by a plurality of hardware devices.

Note that the effects described above are not necessarily limitative. With or in the place of the above effects, there may be achieved any one of the effects described in this specification or other effects that may be grasped from this specification.

### Brief Description of Drawings

FIG. 1 is an explanatory diagram for explaining an example in which recognition processing by a neural network is executed at a plurality of hardware devices.
FIG. 2 is an explanatory diagram for explaining a configuration example of an information processing system according to a first embodiment of the present disclosure.
FIG. 3 is an explanatory diagram for illustrating an example of a restriction input screen for inputting restrictions relating to a plurality of hardware devices.
FIG. 4 is an explanatory diagram for illustrating an example of a design screen for designing a neural network according to the first embodiment.
FIG. 5 is an explanatory diagram for explaining a configuration example of a server 2 according to the first embodiment.
FIG. 6 is a flowchart illustrating a processing flow example of an information processing system 1000 according to the first embodiment.
FIG. 7 is a flowchart illustrating a processing flow example of the information processing system 1000 according to the first embodiment.
FIG. 8 is an explanatory diagram illustrating a screen example displayed at a client terminal 1 according to the first embodiment.
FIG. 9 is an explanatory diagram illustrating a screen example displayed at a client terminal 1 according to the first embodiment.
FIG. 10 is an explanatory diagram illustrating a screen example displayed at a client terminal 1 according to the first embodiment.
FIG. 11 is an explanatory diagram for explaining a configuration example of a server 2-2 according to a second embodiment of the present disclosure.
FIG. 12 is a flowchart for explaining an operation example of the second embodiment.
FIG. 13 is a flowchart for explaining processing flow relating to generation of a neural network according to the second embodiment.
FIG. 14 is a flowchart for explaining generation of a network using mutation by a generating unit 217 according to the second embodiment.
FIG. 15 is a flowchart for explaining generation of a network using crossover by the generating unit 217 according to the second embodiment.
FIG. 16 is an explanatory diagram illustrating a hardware configuration example.

### Mode(s) for Carrying Out the Invention

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.
<<1. First embodiment>>
   <1-1. Background>
   <1-2. Configuration example>
   <1-3. Operation example>
   <1-4. Effects>
<<2. Second embodiment>>
   <2-1. Configuration example>
   <2-2. Operation example>
   <2-3. Effects>
<<3. Modified examples>>
   <3-1. Modified example 1>
   <3-2. Modified example 2>
<<4. Hardware configuration example>>
<<5. Conclusion>>

### <<First embodiment>>

### <1-1. Background>

Before an information processing apparatus according to a first embodiment of the present disclosure is described, background of creation of the present embodiment will be described first.

A neural network which is a model imitating a human cranial neural circuit and is technology for implementing a human learning ability on a computer is attracting attention. As described above, one feature of a neural network is that it has a learning ability. In a neural network, artificial neurons (nodes) forming a network by synaptic coupling are able to acquire a problem solving ability by changing a synaptic coupling strength through learning. In other words, a neural network is able to automatically infer a problem resolution rule by repeating learning.

Examples of learning by a neural network can include image recognition and speech recognition. In a neural network, it is possible to classify input image information into one of numbers from 0 to 9 by, for example, repeatedly learning handwritten number patterns. The learning ability of the neural network as described above has attracted attention as a key for advancing development of artificial intelligence. Further, pattern recognition of the neural network is expected to be applied in various kinds of industrial fields.

Meanwhile, when a neural network is designed, performance (such as, for example, execution time and power consumption) in recognition processing by a neural network becomes an important indicator. Further, in order to improve performance, it can be considered that recognition processing by a neural network is performed using a plurality of different types of hardware devices.

For example, there is a case where overall performance is improved by recognition processing by a neural network being executed by different hardware devices for each type of processing (for example, for each layer included in the neural network).

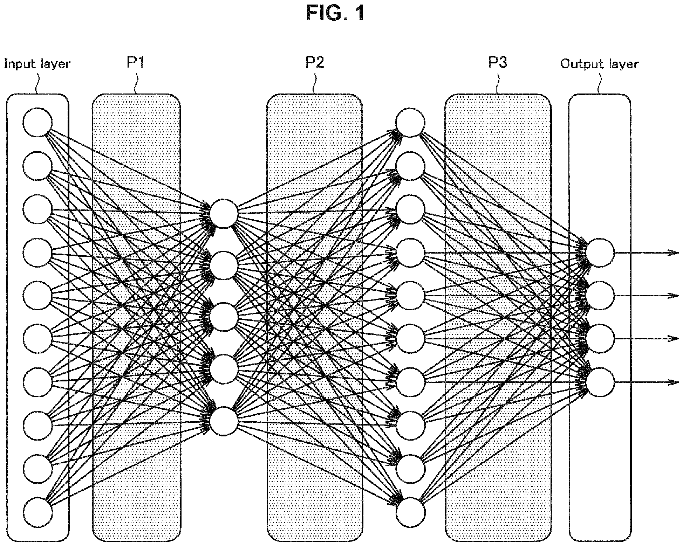

FIG. 1 is an explanatory diagram for explaining an example where recognition processing by a neural network is executed at a plurality of hardware devices. In the neural network illustrated in FIG. 1, processing P1 to processing P3 exist between an input layer and an output layer. The above-described processing P1 to processing P3 may be respectively executed by different hardware devices, and, for example, may be respectively executed by a neurochip, a CPU and a GPU. For example, in the case where power consumption of the CPU is large, and power consumption of the GPU is small, performance can be different in accordance with combination of processing and hardware devices.

However, it has been difficult to design a neural network to be executed on a plurality of hardware devices using a design tool of a neural network which assumes that recognition processing is executed at a single hardware device. Further, even if a neural network to be executed on a plurality of hardware devices can be designed, because there can exist restrictions for the respective hardware devices, there is for example, a possibility that the designed neural network is not fit for execution of the plurality of hardware devices. For example, because there is a case where the number of nodes which can be processed is restricted depending on hardware devices, if a layer including nodes more than the number of nodes is allocated to the hardware device, there is a possibility that recognition processing cannot be executed.

Therefore, the present embodiment has been created in view of the above-described circumstances. In the present embodiment, it is determined whether or not a neural network satisfies restriction on the basis of the restrictions relating to a plurality of hardware devices, and, for example, a warning based on a determination result is provided to a user. According to the present embodiment, it is possible to more efficiently design a neural network which is fit for processing by a plurality of hardware devices. A configuration example of a first embodiment of the present disclosure for realizing the effect as described above will be described below.

### <1-2. Configuration example>

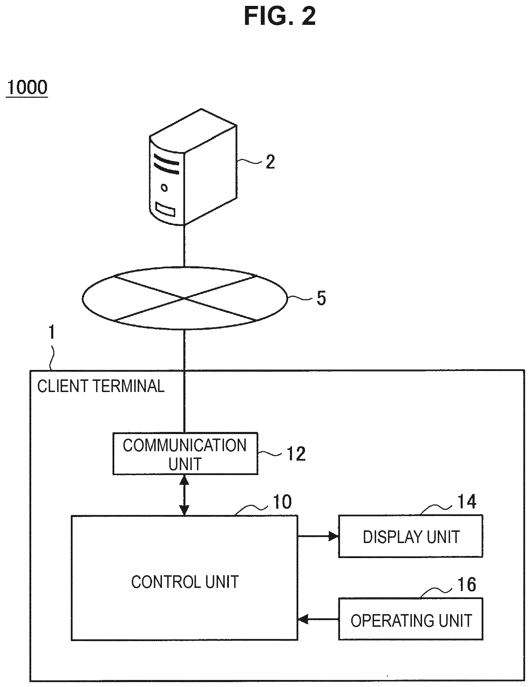

The configuration example of the first embodiment of the present disclosure will be described with reference to FIG. 2. FIG. 2 is an explanatory diagram for explaining a configuration example of an information processing system according to the first embodiment of the present disclosure. In an information processing system 1000 according to the present embodiment, which is an information processing system used by the user to design a neural network, a tool for allowing designing of a neural network, for example, through visual programming may be provided.

In the present disclosure, visual programming refers to approach for creating a program using visual objects without describing a program code in text in software development. In visual programming, for example, it is possible to create a program by operating objects on a graphical user interface (GUI).

As illustrated in FIG. 2, the information processing system 1000 according to the present embodiment includes a client terminal 1, a server 2 and a communication network 5, and the client terminal 1 is connected to the server 2 via the communication network 5 so that the client terminal 1 and the server 2 can perform communication with each other.

The client terminal 1 is an information processing apparatus used by the user to design a neural network. For example, the client terminal 1 may present (display) a design screen for designing a neural network through visual programming to the user. Further, the client terminal 1 may receive a determination result as to whether or not the neural network satisfies restrictions relating to a plurality of hardware devices, from the server 2 and may perform display control processing on the basis of the determination result.

The server 2 is an information processing apparatus which provides a design screen for designing a neural network to the client terminal 1, and creates a program relating to a neural network on the basis of input from the user via the client terminal 1. Further, the server 2 determines whether or not the neural network satisfies restrictions relating to a plurality of hardware devices on the basis of the restrictions and provides the determination result to the client terminal 1. Still further, in the case where the neural network does not satisfy the restrictions, the server 2 does not have to create a program relating to the neural network.

The communication network 5 is a wired or wireless transmission path of information transmitted from an apparatus or a system connected to the communication network 5. For example, the communication network 5 may include a public network such as the Internet, a telephone network and a satellite communication network, various kinds of local area networks (LAN) including Ethernet (registered trademark), a wide area network (WAN), or the like. Further, the communication network 5 may include a private network such as an internet protocol-virtual private network (IP-VPN).

According to the information processing system 1000 according to the present embodiment, it is determined whether or not the neural network designed by the user satisfies restrictions relating to a plurality of hardware devices, and the determination result is provided to the user. Further, according to the information processing system 1000 according to the present embodiment, a design tool of a neural network which allows creation of a program relating to a neural network which satisfies restrictions relating to a plurality of hardware devices is provided.

### (Client terminal)

Subsequently, the client terminal 1 according to the present embodiment will be described in detail. As illustrated in FIG. 2, the client terminal 1 according to the present embodiment is an information processing apparatus which includes a control unit 10, a communication unit 12, a display unit 14 and an operating unit 16. Note that the client terminal 1 may be, for example, a personal computer (PC), a tablet PC, or the like.

The control unit 10 controls each component of the client terminal 1. For example, the control unit 10 has a function as a communication control unit which controls communication by the communication unit 12. According to such a configuration, the communication unit 12 can receive, for example, various kinds of screens and a determination result as to whether or not a neural network satisfies restrictions relating to a plurality of hardware devices, from the server 2.

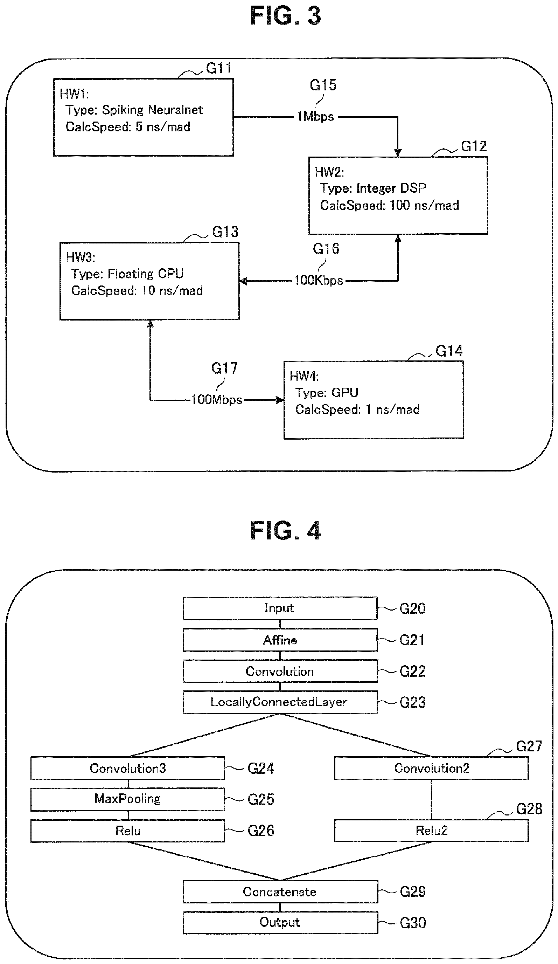

Further, the control unit 10 has a function as a display control unit which performs processing of controlling display by the display unit 14. For example, the control unit 10 may cause various kinds of screens to be displayed at the display unit 14. Examples of the screen which is caused to be displayed at the display unit 14 by the control unit 10 will be described with reference to FIG. 3 and FIG. 4.

FIG. 3 is an explanatory diagram illustrating an example of a restriction input screen for inputting restrictions relating to a plurality of hardware devices. As illustrated in FIG. 3, the restriction input screen includes, for example, hardware input forms G11 to G14 indicating hardware devices used in recognition processing, and communication speed input forms G15 to G17 indicating communication speed between hardware devices. The user can select types of hardware (HW) devices and input information of hardware devices (such as, for example, arithmetic performance) using the hardware input forms G11 to G14. For example, by hardware devices HW1 to HW4 being respectively selected through the hardware input forms G11 to G14, restrictions relating to the hardware devices which are prepared in advance can be set. Further, by the user further inputting information of each hardware device using the hardware input forms G11 to G14, it is also possible to customize the restrictions.

Further, the user can input (customize) communication speed between hardware devices using the communication speed input forms G15 to G17. Note that connection relationship between the hardware input forms G11 to G14 can be changed in response to user operation.

FIG. 4 is an explanatory diagram illustrating an example of a design screen for designing a neural network. The design screen illustrated in FIG. 4 may be received from the server 2 via the communication unit 12. As illustrated in FIG. 4, in the design screen, a plurality of layers G20 to G30 in the neural network are arranged. The arranged layers G20 to G30 may respectively mean, for example, importing of data, processing of data and output of data. The user can design a neural network by performing addition, deletion, change of arrangement, or the like, of a layer using the design screen as illustrated in FIG. 4.

Further, the layers G21 to G29 between the input layer G20 and the output layer G30 may be processed sequentially in order the layers are arranged, or may be processed in parallel. For example, processing of the layers G24 to G26 and the processing of the layers G27 to G28 may be performed in parallel.

Further, the control unit 10 (processing unit) may control the display unit 14 to perform display control processing based on the determination result received from the server 2. For example, in the case where it is determined by the server 2 that the neural network does not satisfy restrictions relating to a plurality of hardware devices, the control unit 10 (display control unit) may cause a warning screen indicating that the restrictions are not satisfied to be displayed. Further, the warning screen caused to be displayed by the control unit 10 may be a screen presenting a portion where the restrictions are not satisfied in the neural network. According to such a configuration, the user can more efficiently design a neural network so as to satisfy restrictions relating to a plurality of hardware devices.

The communication unit 12 (receiving unit) is a communication interface which is controlled by the control unit 10 to mediate communication with other apparatuses. The communication unit 12 supports arbitrary wireless communication protocol or wired communication protocol and establishes communication connection with other apparatuses via the communication network 5 as illustrated in, for example, FIG. 2. For example, the communication unit 12 receives a design screen for designing a neural network and a determination result as to whether or not the neural network satisfies restrictions relating to a plurality of hardware devices, from the server 2. Further, the communication unit 12 causes information relating to input by the user with respect to various kinds of screens displayed at the display unit 14 to be transmitted to the server 2.

The display unit 14 is a display which is controlled by the control unit 10 to display various kinds of screens. For example, the display unit 14 may display the above-described restriction input screen, design screen, warning screen, or the like. Note that the display unit 14 may be realized with, for example, a cathode ray tube (CRT) display apparatus, a liquid crystal display (LCD) apparatus, or an organic light emitting diode (OLED) apparatus.

The operating unit 16 accepts input from the user and provides the input to the control unit 10. For example, the user may operate the operating unit 16 to perform input for customizing restrictions relating to a plurality of hardware devices and designing a neural network. Note that the operating unit 16 may be realized with, for example, a mouse, a keyboard, a touch panel, a button, a switch, a gaze input apparatus, a gesture input apparatus, a sound input apparatus, or the like.

### (Server)

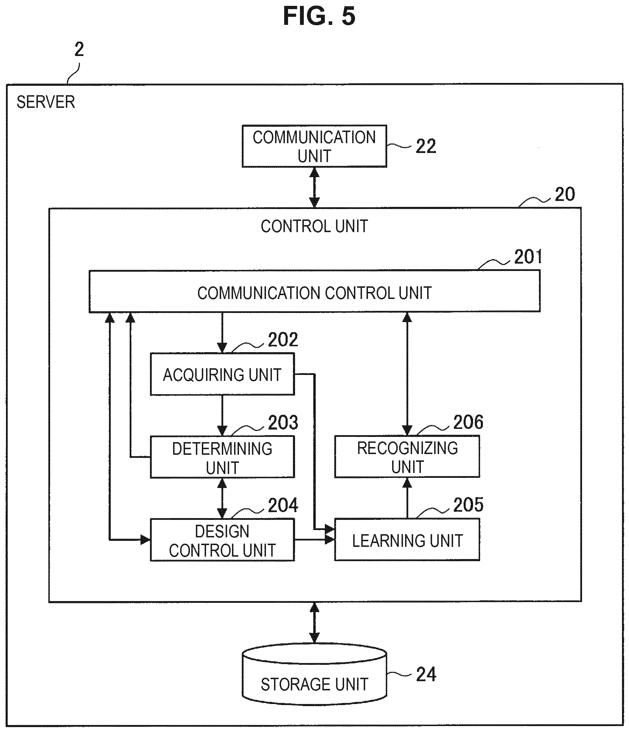

The configuration example of the client terminal 1 according to the present embodiment has been described above. Subsequently, a configuration example of the server 2 according to the present embodiment will be described with reference to FIG. 5. FIG. 5 is an explanatory diagram for explaining the configuration example of the server 2 according to the present embodiment. As illustrated in FIG. 5, the server 2 is an information processing apparatus which includes a control unit 20, a communication unit 22 and a storage unit 24.

The control unit 20 controls each component of the server 2. Further, as illustrated in FIG. 5, the control unit 20 also functions as a communication control unit 201, an acquiring unit 202, a determining unit 203, a design control unit 204, a learning unit 205 and a recognizing unit 206.

The communication control unit 201 controls communication by the communication unit 22. For example, the communication control unit 201 may control the communication unit 22 to cause a design screen of a neural network, a determination result by the determining unit 203, or the like, to be transmitted to the client terminal 1. Further, the communication control unit 201 may control the communication unit 22 to receive information relating to input from the user for customizing restrictions relating to a plurality of hardware devices and designing a neural network.

The acquiring unit 202 acquires restrictions relating to a plurality of hardware devices. For example, the acquiring unit 202 may acquire restrictions relating to a plurality of hardware devices from the storage unit 24. Further, the acquiring unit 202 may acquire restrictions relating to a plurality of hardware devices on the basis of input from the user for customizing restrictions relating to a plurality of hardware devices received via the communication unit 22. Still further, the acquiring unit 202 may acquire restrictions relating to a plurality of hardware devices on the basis of input from the user relating to selection of hardware devices and restrictions relating to hardware devices stored in advance in the storage unit 24.

While an example of restrictions relating to a neurochip, a CPU and a GPU which have been described with reference to FIG. 1 will be described below, the restrictions relating to the hardware devices are not limited to the following examples.

The restrictions relating to a plurality of hardware devices, acquired by the acquiring unit 202 may be, for example, restrictions to be used for determination by the determining unit 203 which will be described later. Examples of the restrictions to be used for determination may include restrictions relating to connection between hardware devices, restrictions relating to communication speed between hardware devices, restrictions relating to processing performance of hardware devices, or the like. Examples of the restrictions to be used for determination by the determining unit 203 will be described below.
- The neurochip is connected to a sensor (input layer).
- The number of nodes which can be processed by the neurochip is less than 10.
- A layer which can be processed by the neurochip is only a convolution layer.
- Communication speed between the neurochip and the CPU is predetermined speed.
- The RAM which can be used by the CPU is equal to or less than a predetermined value.
- Communication speed between the CPU and the GPU is predetermined speed.
- The GPU cannot be directly connected to the neurochip.

Further, restrictions relating to a plurality of hardware devices, acquired by the acquiring unit 202 may be, for example, restrictions to be used by the learning unit 205 which will be described later to perform learning in accordance with hardware devices. Examples of the restrictions to be used for learning may include restrictions relating to characteristics of hardware devices, restrictions relating to types of arithmetic, or the like. Examples of the restrictions to be used for learning by the learning unit 205 will be described below.
- Characteristics of a neuron of the neurochip are spiking.
- The CPU can only perform integer arithmetic (cannot perform floating-point arithmetic).

The determining unit 203 determines whether or not a neural network satisfies the restrictions relating to the plurality of hardware devices acquired by the acquiring unit 202. The determining unit 203, for example, determines whether or not the neural network designed by the design control unit 204 on the basis of input from the user satisfies the above-described restrictions.

Note that the determining unit 203 may determine whether or not the neural network satisfies the restrictions relating to the plurality of hardware devices acquired by the acquiring unit 202 further on the basis of predetermined processing time which is set in advance or input from the user. In such a case, the determining unit 203 may determine that the restrictions are satisfied in the case where the neural network satisfies the restrictions relating to the plurality of hardware devices acquired by the acquiring unit 202 and processing is completed within the predetermined processing time.

Further, in the case where the neural network is changed by the design control unit 204 (for example, addition, deletion, change of arrangement of a layer, or the like, occurs) on the basis of input from the user, the determining unit 203 may determine whether or not the changed neural network satisfies the above-described restrictions. Note that the determining unit 203 may provide the determination result to the communication control unit 201 and the design control unit 204.

The design control unit 204 controls designing of a neural network on the basis of input from the user acquired via the communication unit 22. For example, the design control unit 204 may generate the design screen described with reference to FIG. 4 and provide the design screen to the client terminal 1 via the communication unit 22. Further, the design control unit 204 may control arrangement of layers in the neural network on the basis of input from the user.

Further, the design control unit 204 associates layers in the neural network with hardware devices on the basis of input from the user acquired via the communication unit 22. The input from the user relating to association may be performed by a range being selected in the design screen of a neural network or may be performed by processing order of layers being designated.

Further, the design control unit 204 may create a program for constructing the neural network in the case where it is determined by the determining unit 203 that the neural network designed by the design control unit 204 satisfies the restrictions. According to such a configuration, a program for constructing a neural network which satisfies restrictions relating to a plurality of hardware devices and in which recognition can be executed by the plurality of hardware devices is generated.

Further, the design control unit 204 may rearrange layers relating to change of the neural network so that the restrictions are satisfied in the case where it is determined by the determining unit 203 that the neural network designed by the design control unit 204 does not satisfy the restrictions. For example, the design control unit 204 may rearrange an added layer or a layer whose arrangement is changed to a hardware device which can be communicated from a hardware device with which the layer is currently associated. Further, the design control unit 204 may acquire a determination result as to whether or not the rearranged neural network satisfies the restrictions from the determining unit 203 and repeat rearrangement until the restrictions are satisfied. According to such a configuration, it is possible to more efficiently design a neural network which satisfies restrictions relating to a plurality of hardware devices.

The learning unit 205 learns the neural network designed by the design control unit 204. The learning unit 205 may, for example, perform learning in accordance with a hardware device associated with a layer for each layer in the neural network on the basis of the restrictions acquired by the acquiring unit 202. According to such a configuration, it is possible to improve execution performance of recognition performed by the recognizing unit 206 which will be described later.

For example, learning relating to a layer associated with a neurochip may be performed using a learning method in accordance with characteristics of the neurochip. While the learning method in accordance with the characteristics of the neurochip is not limited, for example, in the case where the characteristics of the neurochip are spiking, it is also possible to use a learning method disclosed in the following Non-Patent Literature 2.

Non-Patent Literature 2: O. Peter, and four others, "Real-time classification and sensor fusion with a spiking deep belief network", 2013, Neuromorphic Engineering 7:178

Further, learning relating to a layer associated with a hardware device which can only perform integer arithmetic may be performed using a learning method in which processing can be performed only through integer arithmetic. While such a learning method is not limited, for example, it is also possible to use a learning method disclosed in the following Non-Patent Literature 3.

Non-Patent Literature 3: M. Courbariaux, and two others, "BinaryConnect: Training Deep Neural Networks with binary weights during propagations TensorFlow: Large-Scale Machine Learning on Heterogeneous Distributed Systems", November 12, 2015, [Online], [Retrieved on April 21, 2016], the Internet < http://arxiv.org/pdf/1511.00363.pdf>

Further, learning relating to a layer associated with a hardware device which can perform floating-point arithmetic can be performed using various kinds of learning methods in which floating-point arithmetic can be performed.

Note that the learning unit 205 may perform learning on the basis of learning data stored in the storage unit 24 or may perform learning on the basis of learning data acquired from outside via the communication unit 22.

The recognizing unit 206 executes recognition on the basis of learning by the learning unit 205. The recognizing unit 206 may execute recognition by performing feedforward calculation at a hardware device associated for each layer in the neural network. Note that the recognizing unit 206 may perform recognition on data stored in the storage unit 24 or may perform recognition on data acquired from outside via the communication unit 22.

The communication unit 22 is a communication interface for mediating communication with other apparatuses. The communication unit 22 supports arbitrary wireless communication protocol or wired communication protocol and establishes communication connection with other apparatuses via the communication network 5 illustrated in, for example, FIG. 2. By this means, for example, the server 2 can receive input from the user, or the like, from the client terminal 1 connected to the communication network 5 and transmit a design screen, a determination result by the determining unit 203, or the like, to the client terminal 1.

The storage unit 24 stores programs and parameters used by each component of the server 2 to function. Further, the storage unit 24 may store restrictions relating to hardware devices, learning data, data for recognition, or the like.

Note that, while an example has been described above where the server 2 includes the learning unit 205 and the recognizing unit 206 and performs learning and recognition, the present embodiment is not limited to the above-described example. For example, learning and recognition may be performed at other apparatuses connected to the communication network 5, and learning and recognition may be respectively performed by different apparatuses. In such a case, the acquiring unit 202 may acquire restrictions relating to a plurality of hardware devices provided at an apparatus which performs the recognition from the apparatus which performs the recognition via the communication unit 22.

### <1-3. Operation example>

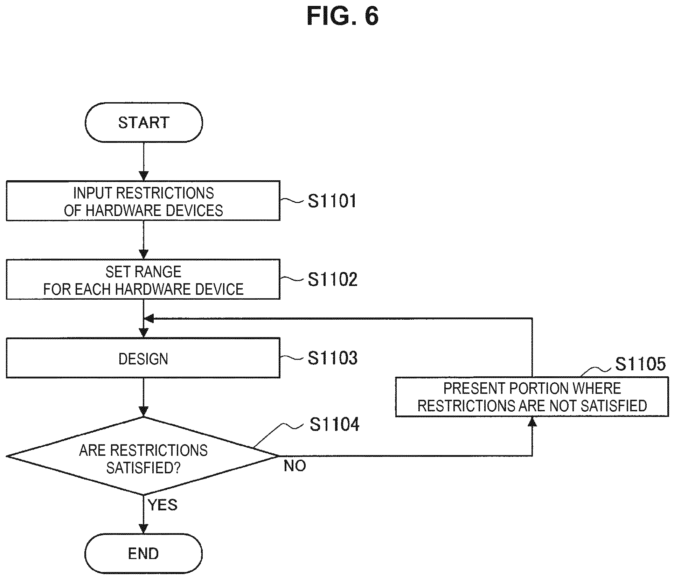

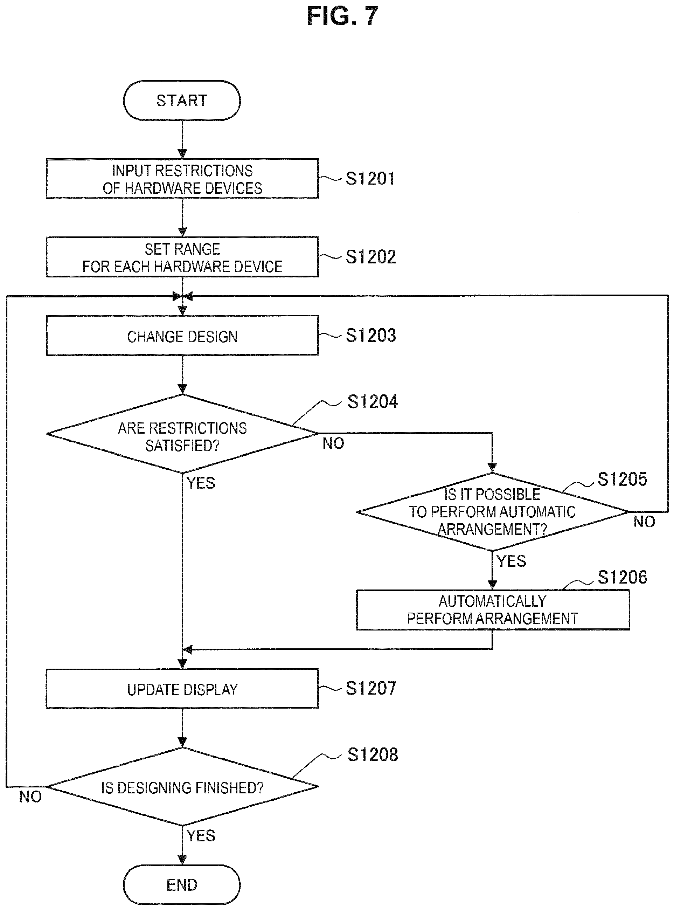

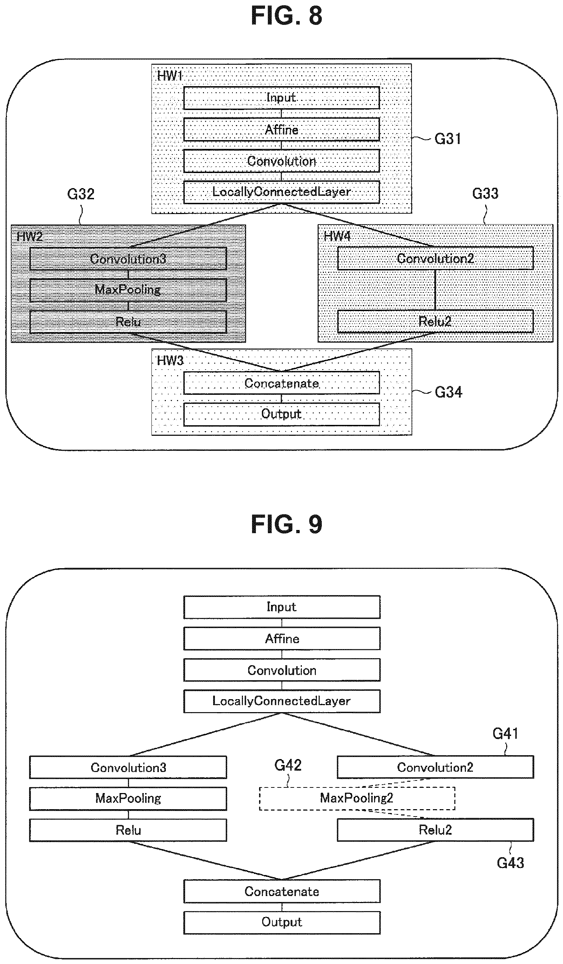

The configuration example of the information processing system 1000 according to the present embodiment has been described above. Subsequently, an operation example of the information processing system 1000 according to the present embodiment will be described with reference to FIG. 6 to FIG. 10. In the following description, after processing flow of the information processing system 1000 is described with reference to FIG. 6 and FIG. 7 first, examples of transition of screens displayed at the client terminal 1 in the present embodiment will be described with reference to FIG. 8 to FIG. 10.

### (Processing flow example 1)

FIG. 6 is a flowchart illustrating a processing flow example of the information processing system 1000 according to the present embodiment. The flowchart illustrated in FIG. 6 illustrates processing flow particularly relating to designing of a neural network among operation according to the present embodiment.

First, the user inputs restrictions relating to hardware devices using the restriction input screen described with reference to FIG. 3, and the acquiring unit 202 acquires the restrictions (S1101).

Subsequently, a range for each hardware device relating to association between hardware devices and layers is set by the user (S1102). Note that setting of a range for each hardware device may be performed by a range on display being selected on the design screen of a neural network or may be performed by processing order of layers being designated.

Subsequently, a neural network is designed by the user using the design screen of a neural network (S1103).

Subsequently, it is determined by the determining unit 203 whether or not the designed neural network satisfies the restrictions relating to the plurality of hardware devices (S1104). In the case where it is determined by the determining unit 203 that the neural network does not satisfy the restrictions (S1104: No), a warning screen which presents a portion (part) where the restrictions are not satisfied is displayed (S1105), and the processing returns to step S1103. On the other hand, in the case where it is determined by the determining unit 203 that the neural network satisfies the restrictions (S1104: Yes), designing processing is finished.

### (Processing flow example 2)

FIG. 7 is a flowchart illustrating a processing flow example of the information processing system 1000 according to the present embodiment. The flowchart illustrated in FIG. 7 illustrates particularly processing flow relating to change of design of the neural network among the operation according to the present embodiment. For example, the processing flow which will be described below may be processing flow when design of the neural network designed through the processing of the flowchart illustrated in FIG. 6 is changed.

Because the processing in step S1201 and processing in step S1202 illustrated in FIG. 7 are similar to the processing in step S1101 and the processing in step S1102 described with reference to FIG. 6, description will be omitted.

Subsequently, change of design of the neural network (for example, addition, deletion or change of arrangement of a layer) is performed by the user (S1203). Subsequently, it is determined by the determining unit 203 whether or not the changed neural network satisfies the restrictions relating to the plurality of hardware devices (S1204).

In the case where it is determined by the determining unit 203 that the neural network does not satisfy the restrictions (S1204: No), it is determined whether or not it is possible to perform automatic rearrangement by the design control unit 204 (S1205). In the case where it is not possible to perform automatic rearrangement (S1205: No), the processing returns to step S1203.

On the other hand, in the case where it is possible to perform automatic rearrangement (S1205: No), the design control unit 204 automatically performs rearrangement (S1206). Further, the neural network subjected to automatic rearrangement is displayed on the design screen (S1207).

Further, in the case where it is determined in step S1204 that the restrictions are satisfied, the neural network whose design is changed is displayed on the design screen (S1207).

If operation for finishing designing is input by the user who confirms the neural network whose design is changed or the neural network subjected to automatic rearrangement on the design screen (S1208: Yes), the processing is finished. Meanwhile, in the case where the user continuously changes design (S1208: No), the processing returns to step S1203.

### (Screen transition examples)

The processing flow of the information processing system 1000 according to the present embodiment has been described above. Subsequently, an example of transition of screens displayed at the client terminal 1 in the processing flow described with reference to FIG. 7 will be described with reference to FIG. 3, FIG. 4 and FIG. 8 to FIG. 10. FIG. 8 to FIG. 10 are explanatory diagrams illustrating examples of screens displayed at the client terminal 1 according to the present embodiment. Note that FIG. 8 to FIG. 10 each illustrates an example of transition of screens relating to change of design of the neural network included in the design screen described with reference to FIG. 4. Further, description will be provided below while referring to the processing steps illustrated in FIG. 7 as appropriate.

First, in step S1201 in FIG. 7, the restriction input screen described with reference to FIG. 3 is displayed. Note that, in the case where it is not necessary for the user to change the restrictions relating to hardware devices, the acquiring unit 202 may, for example, acquire the restrictions from the storage unit 24 without input from the user.

Subsequently, in step S1202 in FIG. 7, the range is selected for each hardware device as illustrated in the design screen in FIG. 8. Here, layers included in the ranges G31 to G34 illustrated in FIG. 8 are associated with hardware devices corresponding to the respective ranges by the design control unit 204. Note that the ranges G31, G32, G33 and G34 illustrated in FIG. 8 are, for example, respectively associated with hardware devices HW1, HW2, HW4 and HW3 in FIG. 3.

Subsequently, in step S1203 in FIG. 7, as illustrated in the screen in FIG. 9, the neural network is changed. In the example illustrated in FIG. 9, the layer G42 is added between the layer G41 and the layer G43. Note that, referring to FIG. 8, because the layer G42 to be newly added in FIG. 9 is included in the range G33 illustrated in FIG. 8, the layer G42 is associated with HW4.

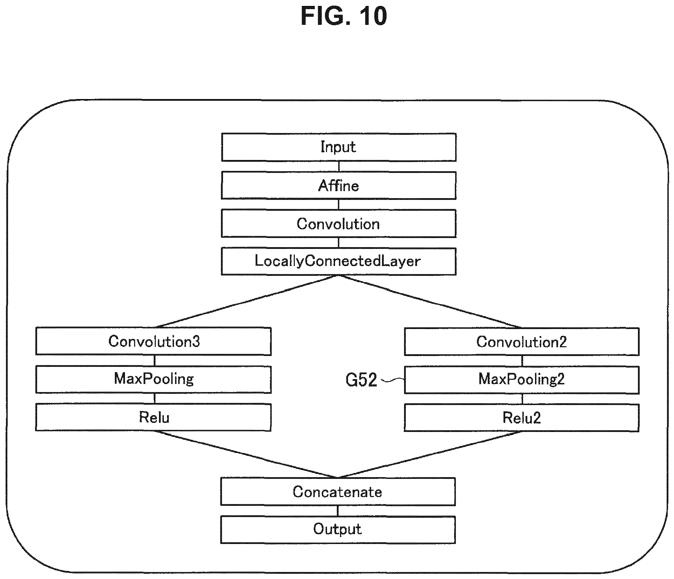

Subsequently, in the case where it is determined that the restrictions are satisfied in step S1204 in FIG. 7, in step S1207, as illustrated in FIG. 10, a design screen including a neural network to which the layer G52 is newly added by change is displayed. On the other hand, in the case where it is determined that the restrictions are not satisfied in step S1204 in FIG. 7, as illustrated in the screen in FIG. 4, a design screen including the neural network before change is displayed (display returns to the design screen in FIG. 4).

### <1-4. Effects>

As described above, according to the first embodiment of the present disclosure, it is determined whether or not a neural network satisfies restrictions relating to a plurality of hardware devices on the basis of the restrictions and, for example, a warning screen based on the determination result is provided to the user. According to such a configuration, it is possible to more efficiently design a neural network which is fit for processing by a plurality of hardware devices. Further, according to the present embodiment, in the case where the changed neural network does not satisfy the restrictions, by rearrangement being automatically performed so that the restrictions are satisfied, it is possible to support designing of a neural network which satisfies the restrictions.

### «2. Second embodiment»

The first embodiment of the present disclosure has been described above. Subsequently, a second embodiment of the present disclosure will be described. In the second embodiment of the present disclosure, another neural network with a different network structure is generated on the basis of an evaluation result of the designed neural network. Further, in the second embodiment of the present disclosure, a Pareto optimal solution relating to the already evaluated neural network is updated on the basis of an evaluation result of the generated neural network. Still further, in the second embodiment of the present disclosure, it is possible to search for an efficient network structure by repeating generation of a network and updating of the Pareto optimal solution.

A configuration example of the second embodiment of the present disclosure for realizing effects as described above will be described below. Note that, in the following description, a difference with the first embodiment will be described, and description regarding the client terminal 1 and the communication network 5 which are in common with the first embodiment will be omitted.

### <2-1. Configuration example>

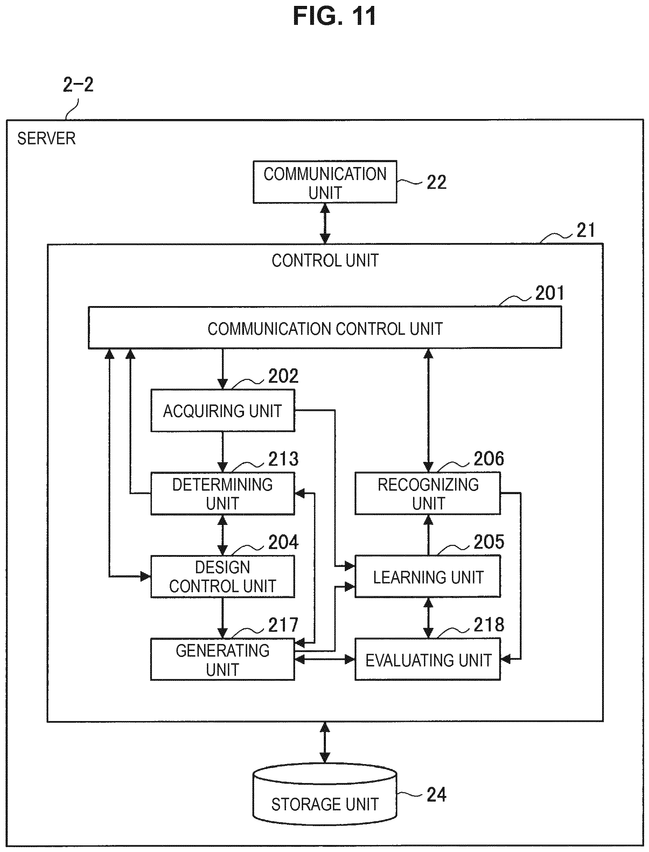

FIG. 11 is an explanatory diagram for explaining a configuration example of a server 2-2 according to the second embodiment of the present disclosure. As illustrated in FIG. 11, the server 2-2 is an information processing apparatus including a control unit 21, a communication unit 22 and a storage unit 24. As illustrated in FIG. 11, the server 2-2 according to the present embodiment is different from the server 2 in FIG. 5 in that a functional configuration of the control unit 21 is partly different from the functional configuration of the control unit 20 in FIG. 5. Note that, because the same reference numerals are assigned to components substantially similar to the respective components illustrated in FIG. 5 among the respective components illustrated in FIG. 11, description will be omitted. In the following description, functions of the control unit 21 according to the present embodiment as a determining unit 213, a generating unit 217 and an evaluating unit 218 will be described.

The determining unit 213 according to the present embodiment determines whether or not a neural network designed or changed by the design control unit 204 on the basis of input from the user satisfies the restrictions acquired by the acquiring unit 202 in a similar manner to the determining unit 203 described in the first embodiment. Further, the determining unit 213 according to the present embodiment determines whether or not a neural network generated by the generating unit 217 which will be described later satisfies the restrictions acquired by the acquiring unit 202.

The generating unit 217 has a function of generating another neural network with a different network structure from an original network. For example, the generating unit 217 may generate another neural network with a different network structure from a neural network (hereinafter, also referred to as a seed network) which is designed on the basis of input from the user and determined to satisfy the restrictions by the determining unit 213. Further, the generating unit 217 may generate another neural network with a different network structure from a neural network relating to a Pareto optimal solution.

Generation of a neural network by the generating unit 217 according to the present embodiment may be, for example, realized by genetic operation including mutation, crossover, or the like. Here, the above-described mutation may be one obtained by modeling mutation of a gene observed in living organisms. That is, in the present embodiment, it is possible to generate another neural network with a different network structure by causing a layer to mutate while using respective layers constituting a network to resemble genes. For example, the mutation according to the present embodiment may include at least one of insertion of a layer, deletion of a layer, change of a layer type, change of a parameter, a graph branch and deletion of a graph branch.

Further, the above-described crossover may be one obtained by modeling partial exchange of a chromosome in crossing of living organisms. That is, with the information processing method according to the present disclosure, it is possible to generate the above-described another neural network by partially exchanging layer configurations of two networks.

Note that, while, in the above description, a case has been described as an example where another neural network is generated by genetic operation, a method for generating a neural network according to the present embodiment is not limited to such an example. Generation of another neural network according to the present embodiment may be, for example, realized using a neural network which changes a network structure of an input network. Various methods including the above-described examples can be applied to generation of a neural network.

Further, the generating unit 217 may repeat generation of another neural network until a neural network which is determined to satisfy the restrictions by the determining unit is generated. According to such a configuration, the generating unit 217 can generate a neural network which satisfies restrictions relating to a plurality of hardware devices.

The evaluating unit 218 has a function of acquiring an evaluation result of the generated neural network. The evaluating unit 218 may acquire the above-described evaluation result by, for example, causing the recognizing unit 206 to execute the generated neural network. Note that acquisition of the evaluation result by the evaluating unit 218 is not limited to the above-described example, and the evaluation result may be acquired by causing various kinds of devices connected via the communication network 5 to execute the generated neural network.

Further, the evaluation result acquired by the evaluating unit 218 may include a calculation amount relating to the generated neural network and at least one of a training error and a validation error (hereinafter, the training error and the validation error may be collectively expressed as an error). The evaluating unit 218 can acquire the above-described calculation amount on the basis of a network structure of the generated neural network. Note that the evaluation result according to the present embodiment is not limited to the above-described example and may include, for example, total cost of hardware devices calculated from memory usage, an amount of heat generation, power consumption and a calculation amount relating to hardware devices, total service cost, or the like, including server cost, or the like,. The evaluating unit 218 can calculate the above-described values on the basis of information relating to hardware devices and services stored in advance.

Further, the evaluating unit 218 has a function of updating a Pareto optimal solution relating to the already evaluated neural network on the basis of the evaluation result of the generated neural network. That is, the evaluating unit 218 acquires the evaluation result of the neural network generated by the generating unit 217 and repeatedly executes updating of the Pareto optimal solution on the basis of the evaluation result.

### <2-2. Operation example>

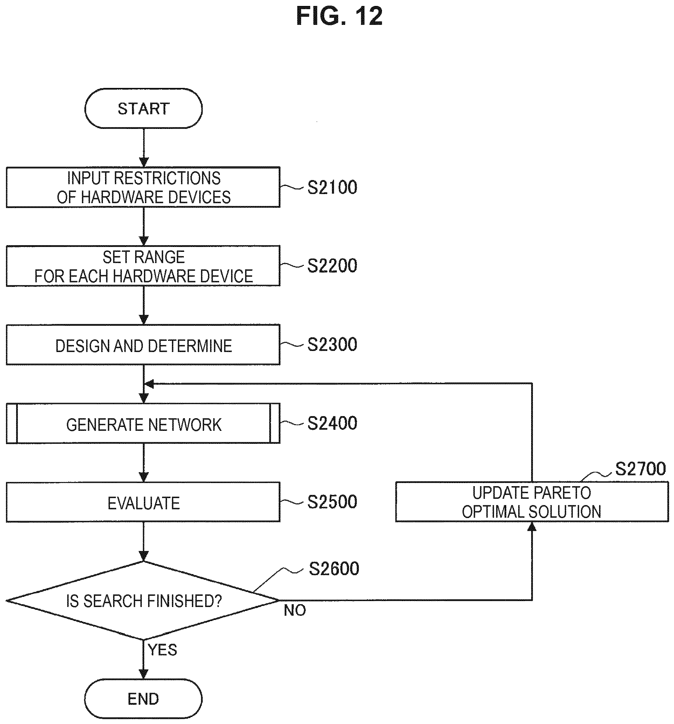

The configuration example of the server 2-2 according to the present embodiment has been described above. Subsequently, an operation example of the present embodiment will be described with reference to FIG. 12 to FIG. 15.

FIG. 12 is a flowchart for explaining the operation example of the present embodiment. Because processing in step S2100 and processing in step S2200 illustrated in FIG. 7 are similar to the processing in step S1101 and the processing in S1102 described with reference to FIG. 6, description will be omitted.

Subsequently, a neural network is designed by the user, and determination is performed by the determining unit 213 (S2300). Note that processing in step S2300 may include, for example, processing similar to processing in step S1103 to S1105 described with reference to FIG. 6 or processing in step S1203 to S1208 described with reference to FIG. 7.

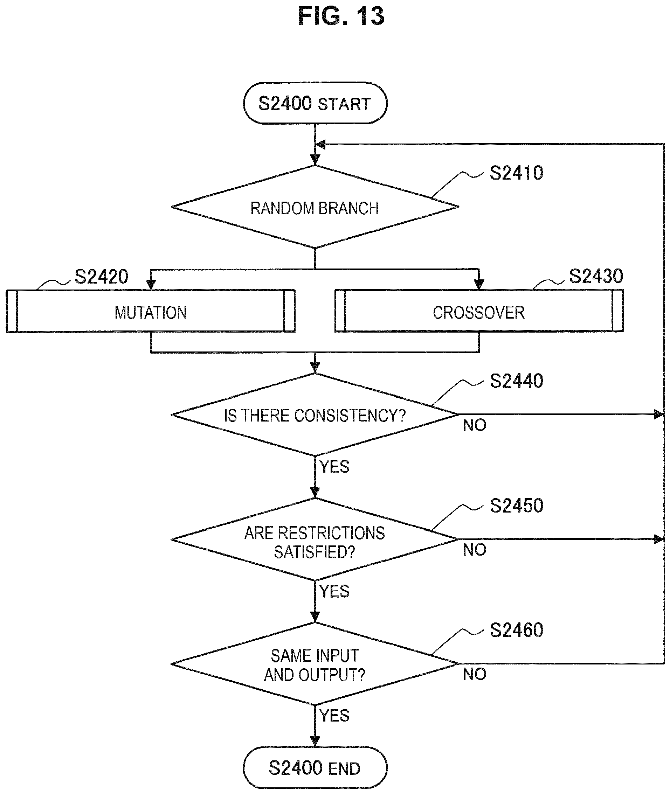

Subsequently, the generating unit 217 generates another neural network with a different network structure from a neural network (seed network) which is determined to satisfy the restrictions by the determining unit 213 in step S2300 (S2400). Note that detailed processing flow relating to generation of a neural network in step S2400 will be described later with reference to FIG. 13 to FIG. 15.

Subsequently, the evaluating unit 218 acquires the evaluation result of the generated neural network (S2500). In the case where search of a network structure by the evaluating unit 218 is not finished (S2600: No), the processing proceeds to step S2700.

In step S2700, the evaluating unit 218 updates a Pareto optimal solution relating to the already evaluated neural network on the basis of the evaluation result of the generated neural network. Subsequently, the processing returns to step S2400, and the generating unit 217 generates another neural network with a different network structure from the neural network relating to the Pareto optimal solution.

Through the above-described processing from step S2400 to S2700, generation of a neural network and updating of the Pareto optimal solution are repeatedly executed, and, when search of a network structure is finished (S2600: Yes), the processing is finished.

Note that, when search of a network structure is finished, for example, a neural network with a minimum error (maximum performance) or a neural network with a minimum calculation amount, or a neural network relating to an intermediate solution may be obtained. Definition of the intermediate solution may be designed as appropriate in accordance with conditions. Note that the neural networks as described above may be presented to the user, and the user may select one of the neural networks.

Overall processing flow of the operation example of the present embodiment has been described above. Subsequently, processing flow relating to generation of a neural network in step S2400 illustrated in FIG. 12 will be described with reference to FIG. 13. FIG. 13 is a flowchart for explaining processing flow relating to generation of a neural network.

Referring to FIG. 13, first, the generating unit 217 randomly determines a generating method of another neural network to be applied to the original neural network (S2410). In this event, the original neural network may be a seed network which is designed on the basis of input by the user and which is determined to satisfy the restrictions by the determining unit 213. Further, the original neural network may be a network which is randomly selected by the generating unit 217 from neural networks relating to the Pareto optimal solution updated by the evaluating unit 218.

Subsequently, the generating unit 217 generates another neural network with a different network structure from the original neural network on the basis of the generating method selected in step S2410. Referring to an example illustrated in FIG. 13, the generating unit 217 according to the present embodiment may generate the above-described another neural network by causing the original neural network to mutate (S2420).

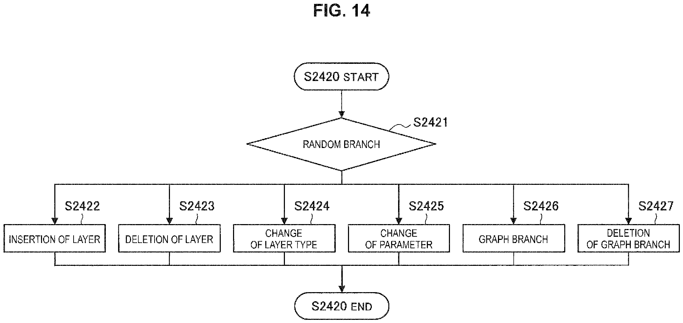

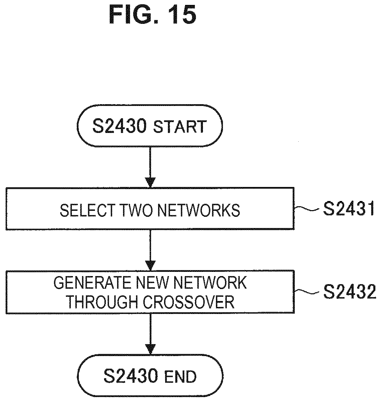

Further, the generating unit 217 may generate the above-described another neural network by crossing the original neural network (S2430). Detailed flow of mutation and crossover in step S2420 and step S2430 will be respectively described later with reference to FIG. 14 and FIG. 15.

Subsequently, the generating unit 217 determines consistency of the neural network generated in step S2420 or step S2430 (S2440). In this event, the generating unit 217 may determine whether or not an error occurs in a layer configuration of the generated neural network. The generating unit 217 may determine that there is no consistency in a network, for example, in the case where input data is too small upon Max-Pooling processing. In this manner, in the case where it is determined that there is no consistency in the generated neural network (S2450: No), the generating unit 217 discards the generated neural network, and the processing returns to step S2410.

Meanwhile, in the case where it is recognized that there is consistency in the generated neural network (S2450: Yes), the determining unit 213 determines whether or not the generated neural network satisfies the restrictions acquired by the acquiring unit 202. In the case where the determining unit 213 determines that the generated neural network does not satisfy the restrictions (S2450: No), the generating unit 217 discards the generated neural network, and the processing returns to step S2410.

Meanwhile, in the case where it is determined that the generated neural network satisfies the restrictions, the generating unit 217 determines whether or not input and output of the generated neural network and input and output of the original neural network are the same (S2460). Here, in the case where input and output of the generated neural network is different from input and output of the original neural network (S2460: No), because it is difficult to process an assumed recognition problem, the generating unit 217 discards the generated neural network, and the processing returns to step S2410. On the other hand, in the case where input and output of the generated neural network and input and output of the original neural network are the same (S2460: Yes), the generating unit 217 finishes processing relating to generation of a network in a normal way.

Generation of a neural network according to the present embodiment has been described above. As described above, the generating unit 217 according to the present embodiment can generate another neural network with a different network structure from a seed network or a network relating to a Pareto optimal solution. Note that, while, in FIG. 13, a case has been described as an example where the generating unit 217 generates another neural network by genetic operation using mutation or crossover, generation of a network according to the present embodiment is not limited to such an example. The generating unit 217 according to the present embodiment may generate the above-described another neural network using a neural network which changes a network structure of the input neural network. Various methods may be applied to generation of a neural network by the generating unit 217.

Subsequently, flow of generation of a network using mutation according to the present embodiment will be described. FIG. 14 is a flowchart for explaining generation of a network using mutation by the generating unit 217. That is, the flowchart illustrated in FIG. 14 illustrates detailed control of the generating unit 217 in step S2420 illustrated in FIG. 13. Referring to FIG. 14, mutation according to the present embodiment may include insertion of a layer, deletion of a layer, change of a layer type, change of a parameter, a graph branch and deletion of a graph branch.

Referring to FIG. 14, first, the generating unit 217 randomly determines a method of mutation to be applied to the original neural network (S2421). Subsequently, the generating unit 217 changes a network structure of the original neural network on the basis of the method selected in step S2421.

The generating unit 217 may perform processing of inserting a new layer (S2422). The generating unit 217 can generate another neural network with a different network structure, for example, by newly inserting an activating function such as Relu to the original neural network.

Further, the generating unit 217 may perform processing of deleting an existing layer (S2423). The generating unit 217 can generate another neural network with a different network structure, for example, by deleting a layer relating to Max-Pooling from the original neural network.

Further, the generating unit 217 may perform processing of changing a layer type of an existing layer (S2424). The generating unit 217 can generate another neural network with a different structure, for example, by substituting another activating function for an activating function existing in the original neural network.

Further, the generating unit 217 may perform processing of changing a parameter relating to an existing layer (S2425). The generating unit 217 can generate another neural network with a different network structure, for example, by changing a kernel shape of an existing Convolution layer.

Further, the generating unit 217 may perform processing of creating a new graph branch (S2426). The generating unit 217 can generate another neural network, for example, by creating a graph branch by copying part of the existing layer and inserting a Concatenate layer as a coupling portion of the graph branch.

Further, the generating unit 217 may perform processing of deleting an existing graph branch (S2427). The generating unit 217 can generate another neural network, for example, by deleting one route of the existing graph branch and also deleting a Concatenate layer in the case where a branch disappears by the deletion.

Generation of a network using mutation by the generating unit 217 according to the present embodiment has been described above. Note that, while, in the above description, a case has been described as an example where the generating unit 217 executes processing from step S2422 to S2427 which is randomly selected, control of mutation according to the present embodiment is not limited to such an example. The generating unit 217 may perform two or more types of processing relating to step S2422 to S2427 at the same time or may separately perform execution and judgement in step S2422 to S2427. Further, the generating unit 217 may execute processing other than processing illustrated in the example in FIG. 14. Control of mutation by the generating unit 217 can be flexibly changed.

Subsequently, flow of generation of a network by crossover according to the present embodiment will be described. FIG. 15 is a flowchart for explaining generation of a network using crossover by the generating unit 217. That is, the flowchart illustrated in FIG. 15 illustrates detailed control of the generating unit 217 in step S2430 illustrated in FIG. 13.

Referring to FIG. 15, first, the generating unit 217 selects two original networks for executing crossover (S2431). Here, the generating unit 217 may select two seed networks which are designed on the basis of input by the user and determined to satisfy the restrictions by the determining unit 213. Further, the generating unit 217 can also select one seed network which is designed on the basis of input by the user and determined to satisfy the restrictions by the determining unit 213 and a network for crossover registered in advance. Still further, the generating unit 217 may select another neural network generated by mutation from the seed network which is designed on the basis of input by the user and determined to satisfy the restrictions by the determining unit 213.

Subsequently, the generating unit 217 crosses the two networks selected in step S2431 to generate another neural network with a different network structure (S2432). In this event, the generating unit 217 may execute crossover using various methods. The generating unit 217 can generate the above-described another neural network, for example, by single-point crossover, two-point crossover, multipoint crossover, uniform crossover, or the like.

Generation of a neural network according to the present embodiment has been described above. As described above, the generating unit 217 according to the present embodiment can generate another neural network with a different network structure from the original neural network by genetic operation including mutation and crossover. That is, with the information processing method according to the present embodiment, it becomes possible to search for a more efficient network structure by repeating updating of a Pareto optimal solution on the basis of the evaluation result of the neural network generated by the generating unit 217.

### <2-3. Effects>

As described above, according to the second embodiment of the present disclosure, it is possible to generate another neural network with a different network structure on the basis of the evaluation result of the designed neural network. Further, according to the present embodiment, it is possible to search for an efficient network structure by repeating generation of a network and updating of a Pareto optimal solution. Further, in the present embodiment, the generated neural network is a neural network which is determined by the determining unit 213 to satisfy restrictions relating to a plurality of hardware devices. Therefore, according to the present embodiment, it is possible to search for an efficient network structure which is fit for processing by a plurality of hardware devices.

### «3. Modified examples»

The embodiments of the present disclosure have been described above. Some modified examples according to the present disclosure will be described below. Note that the respective modified examples described below may be independently applied to each embodiment, or combination of the modified examples may be applied to each embodiment. Further, each modified example may be applied in place of the configuration described in the above-described embodiments or may be applied in addition to the configurations described in the above-described embodiments.

### <3-1. Modified example 1>

While an example has been described in the above-described embodiments where a neural network is designed through visual programming, the present technology is not limited to such an example. For example, designing of a neural network according to the present technology may be performed through programming using text, or operation on a command user interface (CUI). Further, restrictions relating to hardware devices and association between hardware devices and layers are not limited to the examples described above, and the restrictions and association may be input using text or the CUI.

### <3-2. Modified example 2>

Further, while functions provided at the client terminal 1, the server 2 and the server 2-2 have been described with reference to FIG. 2, FIG. 5 and FIG. 11 in the above-described embodiments, the present technology is not limited to such examples. The functions of the client terminal 1 described in the above-described embodiments may be provided at the server 2 or the server 2-2, or the functions of the server 2 or the server 2-2 described in the above-described embodiments may be provided at the client terminal 1.

For example, the client terminal 1 may have functions of the acquiring unit 202, the determining unit 203 and the design control unit 204 described with reference to FIG. 5, and information of the neural network designed using the client terminal 1 may be provided to the server 2.

### «4. Hardware configuration example»

Each embodiment of the present disclosure has been described above. The above-described information processing such as the display control processing, the communication control processing, the acquisition processing, the determination processing, the design control processing, the learning processing, the recognition processing, the network generation processing and the evaluation result acquisition processing is realized by cooperation between software and, the client terminal 1 and the servers 2 and 2-2. A hardware configuration example of the server 2 according to the present embodiment will be described below.

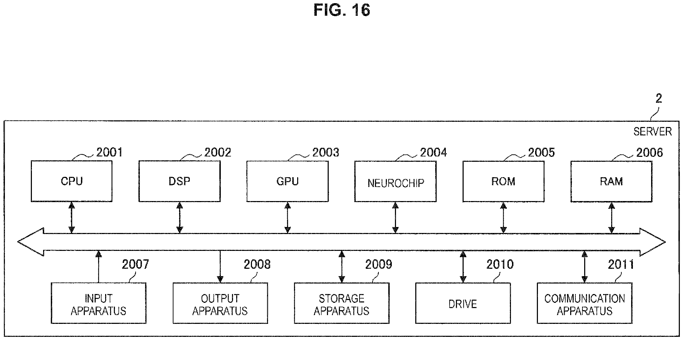

FIG. 16 is an explanatory diagram illustrating a hardware configuration of the server 2. As illustrated in FIG. 16, the server 2 includes a central processing unit (CPU) 2001, a digital signal processor (DSP) 2002, a graphics processing unit (GPU) 2003, a neurochip 2004, a read only memory (ROM) 2005, a random access memory (RAM) 2006, an input apparatus 2007, an output apparatus 2008, a storage apparatus 2009, a drive 2010 and a communication apparatus 2011.

The CPU 2001, which functions as an operation processing apparatus and a control apparatus, controls the whole operation within the server 2 in accordance with various kinds of programs. Further, the CPU 2001 may be a microprocessor. Further, the DSP 2002, the GPU 2003 and the neurochip 2004 function as operation processing apparatuses. For example, the CPU 2001, the DSP 2002, the GPU 2003 and the neurochip 2004 may be hardware devices which execute recognition processing by a neural network in the present disclosure. The ROM 2005 stores programs, operation parameters, or the like, to be used by the CPU 2001. The RAM 2006 temporarily stores programs to be used in execution of the CPU 2001, the DSP 2002, the GPU 2003 and the neurochip 2004, and parameters, or the like, which change as appropriate in the execution. These are connected to one another with a host bus including a CPU bus, or the like. Functions of the communication control unit 201, the acquiring unit 202, the determining unit 203, the design control unit 204 and the learning unit 205 are realized mainly by cooperation between the CPU 2001, the ROM 2005 and the RAM 2006, and software.

The input apparatus 2007 is configured with input means for allowing the user to input information, such as a mouse, a keyboard, a touch panel, a button, a microphone, a switch and a lever, an input control circuit which generates an input signal on the basis of input by the user and outputs the input signal to the CPU 2001, or the like. The user of the server 2 can input various kinds of data and give an instruction of processing operation to the server 2 by operating the input apparatus 2007.

The output apparatus 2008 includes, for example, a liquid crystal display (LCD) apparatus, an organic light emitting diode (OLED) apparatus and a display apparatus such as a lamp. Further, the output apparatus 2008 includes a sound output apparatus such as a speaker and a headphone. For example, the display apparatus displays a captured image, a generated image, or the like. Meanwhile, the sound output apparatus converts sound data, or the like, into sound and outputs the sound.

The storage apparatus 2009 is an apparatus for data storage configured as an example of a storage unit 24 of the server 2 according to the present embodiment. The storage apparatus 2009 may include a storage medium, a recording apparatus which records data in a storage medium, a readout apparatus which reads out data from a storage medium, a deleting apparatus which deletes data recorded in a storage medium, or the like. The storage apparatus 2009 stores programs to be executed by the CPU 2001 and various kinds of data.

The drive 2010, which is a reader/writer for storage media, is incorporated into or externally attached to the server 2. The drive 2010 reads out information recorded in a removable storage medium such as a magnetic disk, an optical disk, a magneto optical disk, a semiconductor memory, or the like, which are mounted and outputs the information to the RAM 2005. Further, the drive 2010 can write information in the removable storage medium.

The communication apparatus 2011 is a communication interface configured with a communication device, or the like. Further, the communication apparatus 2011 may be a communication apparatus which supports a wireless local area network (LAN), a communication apparatus which supports long term evolution (LTE) or a wired communication apparatus which performs wired communication. The communication apparatus 2011 corresponds to the communication unit 22 of the server 2.

Note that, while the hardware configuration of the server 2 has been described above, the client terminal 1 and the server 2-2 according to the second embodiment also have hardware devices corresponding to the CPU 2001, the ROM 205, the RAM 206, or the like, in a similar manner to the server 2. Functions of, for example, the control unit 10 are realized by cooperation between hardware devices and software of the client terminal 1. Further, functions corresponding to the determining unit 213, the generating unit 217 and the evaluating unit 218 are realized by, for example, cooperation between hardware devices and software of the server 2-2 according to the second embodiment.

### «5. Conclusion»

As described above, according to the embodiments of the present disclosure, it is possible to more efficiently design a neural network which is fit for processing by a plurality of hardware devices.

The preferred embodiments of the present disclosure have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, the respective steps in the above-described embodiments do not always have to be processed in chronological order along order the steps are described in the flowcharts. For example, the respective steps in the processing of the above-described embodiments may be processed in order different from the order the steps are described in the flowcharts or may be processed in parallel. For example, in FIG. 6, the processing in step S1101 of inputting or acquiring restrictions relating to hardware devices and the processing in step S1102 of setting a range for each hardware device may be performed after the processing in step S1103 relating to designing of a neural network.

Further, according to the above-described embodiments, it is possible to provide a computer program for causing hardware devices such as the CPU 2001, the ROM 2005 and the RAM 2006 to exert functions similar to the respective components of the above-described client terminal 1, server 2 and server 2-2. Further, a recording medium in which the computer program is recorded is also provided.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including:
   an acquiring unit configured to acquire restrictions relating to a plurality of hardware devices; and
   a determining unit configured to perform determination as to whether or not a neural network satisfies the restrictions.
(2) The information processing apparatus according to (1), further including:
   a design control unit configured to control designing of the neural network based on input by a user.
(3) The information processing apparatus according to (2),
   in which the determining unit performs the determination in a case where the neural network is changed by the design control unit.
(4) The information processing apparatus according to (3),
   in which the design control unit performs rearrangement of a layer relating to the change so that the restrictions are satisfied in a case where it is determined by the determining unit that the restrictions are not satisfied.
(5) The information processing apparatus according to any one of (2) to (4),
   in which the design control unit creates a program for constructing the neural network in a case where it is determined by the determining unit that the restrictions are satisfied.
(6) The information processing apparatus according to any one of (1) to (5), further including:
   a display control unit configured to cause a warning screen indicating that the restrictions are not satisfied to be displayed in a case where it is determined by the determining unit that the restrictions are not satisfied.
(7) The information processing apparatus according to (6),
   in which the warning screen presents a portion where the restrictions are not satisfied in the neural network.
(8) The information processing apparatus according to any one of (1) to (7), further including:
   a learning unit configured to perform learning for each layer in the neural network, in accordance with a hardware device associated with the layer, on a basis of the restrictions.
(9) The information processing apparatus according to any one of (1) to (8), further including:
   a generating unit configured to generate another neural network with a different network structure from a neural network determined to satisfy the restrictions by the determining unit; and
   an evaluating unit configured to acquire an evaluation result of the generated neural network,
   in which the evaluating unit updates a Pareto optimal solution relating to an already evaluated neural network on a basis of the evaluation result of the generated neural network, and
   the generating unit generates another neural network with a different network structure from a neural network relating to the Pareto optimal solution.
(10) The information processing apparatus according to (9),
   in which the determining unit performs determination as to whether or not the neural network generated by the generating unit satisfies the restrictions, and
   the generating unit repeats generation of the other neural network until a neural network determined to satisfy the restrictions by the determining unit is generated.
(11) The information processing apparatus according to (9) or (10),
   in which the generating unit generates the other neural network by genetic operation.
(12) The information processing apparatus according to (11),
   in which the genetic operation includes at least one of mutation and crossover.
(13) The information processing apparatus according to (12),
   in which the mutation includes at least one of insertion of a layer, deletion of a layer, change of a layer type, change of a parameter, a graph branch and deletion of a graph branch.
(14) The information processing apparatus according to any one of (1) to (13), further including:
   a communication control unit configured to cause a determination result by the determining unit to be transmitted.
(15) An information processing apparatus including:
   a receiving unit configured to receive a determination result as to whether or not a neural network satisfies restrictions relating to a plurality of hardware devices; and
   a processing unit configured to perform processing on a basis of the determination result.
(16) An information processing method including:
   acquiring restrictions relating to a plurality of hardware devices; and
   performing determination as to whether or not a neural network satisfies the restrictions.

### Reference Signs List

- 1: client terminal
- 2, 2-2,: server
- 5: communication network
- 10: control unit
- 12: communication unit
- 14: display unit
- 16: operating unit
- 20, 21: control unit
- 22: communication unit
- 24: storage unit
- 201: communication control unit
- 202: acquiring unit
- 203, 213: determining unit
- 204: design control unit
- 205: learning unit
- 206: recognizing unit
- 217: generating unit
- 218: evaluating unit
- 1000: information processing system

## Claims

1. An information processing apparatus comprising:
an acquiring unit configured to acquire restrictions relating to a plurality of hardware devices; and
a determining unit configured to perform determination as to whether or not a neural network satisfies the restrictions.

2. The information processing apparatus according to claim 1, further comprising:
a design control unit configured to control designing of the neural network based on input by a user.

3. The information processing apparatus according to claim 2,
wherein the determining unit performs the determination in a case where the neural network is changed by the design control unit.

4. The information processing apparatus according to claim 3,
wherein the design control unit performs rearrangement of a layer relating to the change so that the restrictions are satisfied in a case where it is determined by the determining unit that the restrictions are not satisfied.

5. The information processing apparatus according to claim 2,
wherein the design control unit creates a program for constructing the neural network in a case where it is determined by the determining unit that the restrictions are satisfied.

6. The information processing apparatus according to claim 1, further comprising:
a display control unit configured to cause a warning screen indicating that the restrictions are not satisfied to be displayed in a case where it is determined by the determining unit that the restrictions are not satisfied.

7. The information processing apparatus according to claim 6,
wherein the warning screen presents a portion where the restrictions are not satisfied in the neural network.

8. The information processing apparatus according to claim 1, further comprising:
a learning unit configured to perform learning for each layer in the neural network, in accordance with a hardware device associated with the layer, on a basis of the restrictions.

9. The information processing apparatus according to claim 1, further comprising:
a generating unit configured to generate another neural network with a different network structure from a neural network determined to satisfy the restrictions by the determining unit; and
an evaluating unit configured to acquire an evaluation result of the generated neural network,
wherein the evaluating unit updates a Pareto optimal solution relating to an already evaluated neural network on a basis of the evaluation result of the generated neural network, and
the generating unit generates another neural network with a different network structure from a neural network relating to the Pareto optimal solution.

10. The information processing apparatus according to claim 9,
wherein the determining unit performs determination as to whether or not the neural network generated by the generating unit satisfies the restrictions, and
the generating unit repeats generation of the other neural network until a neural network determined to satisfy the restrictions by the determining unit is generated.

11. The information processing apparatus according to claim 9,
wherein the generating unit generates the other neural network by genetic operation.

12. The information processing apparatus according to claim 11,
wherein the genetic operation includes at least one of mutation and crossover.

13. The information processing apparatus according to claim 12,
wherein the mutation includes at least one of insertion of a layer, deletion of a layer, change of a layer type, change of a parameter, a graph branch and deletion of a graph branch.

14. The information processing apparatus according to claim 1, further comprising:
a communication control unit configured to cause a determination result by the determining unit to be transmitted.

15. An information processing apparatus comprising:
a receiving unit configured to receive a determination result as to whether or not a neural network satisfies restrictions relating to a plurality of hardware devices; and
a processing unit configured to perform processing on a basis of the determination result.

16. An information processing method comprising:
acquiring restrictions relating to a plurality of hardware devices; and
performing determination as to whether or not a neural network satisfies the restrictions.
